(19) Europäisches Patentamt
European Patent Office
Office européen des brevets

(11) **EP 1 840 354 B1**

(12) **EUROPÄISCHE PATENTSCHRIFT**

(45) Veröffentlichungstag und Bekanntmachung des Hinweises auf die Patenterteilung:
**29.11.2017 Patentblatt 2017/48**

(51) Int Cl.:
*F02C 9/00* *(2006.01)*      *F02C 9/28* *(2006.01)*

(21) Anmeldenummer: **07103472.2**

(22) Anmeldetag: **05.03.2007**

(54) **Verfahren zum Betrieb einer Gasturbinenanlage sowie Gasturbinenanlage zur Durchführung des Verfahrens**

Method for operating a gas turbine plant and gas turbine plant for carrying out the method

Procédé de fonctionnement d'une turbine à gaz et une telle turbine à gaz

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **28.03.2006 CH 4962006**
               **11.08.2006 CH 12962006**

(43) Veröffentlichungstag der Anmeldung:
**03.10.2007 Patentblatt 2007/40**

(73) Patentinhaber: **Ansaldo Energia IP UK Limited London W1G 9DQ (GB)**

(72) Erfinder:
• **Nemet, Anton**
**5415, Nussbaumen (CH)**

• **Hoffmann, Jürgen**
**5417, Untersiggenthal (CH)**

(74) Vertreter: **Bernotti, Andrea et al**
**Studio Torta S.p.A.**
**Via Viotti, 9**
**10121 Torino (IT)**

(56) Entgegenhaltungen:
| | |
|---|---|
| **EP-A- 1 531 243** | **EP-A1- 0 620 362** |
| **EP-A2- 0 765 998** | **EP-A2- 1 231 369** |
| **WO-A-03/027460** | **WO-A-2004/085816** |
| **DE-A1- 10 322 703** | **DE-A1- 19 548 739** |
| **DE-A1-102005 011 287** | **US-A1- 2003 014 959** |
| **US-A1- 2004 011 050** | |

**Beschreibung**

TECHNISCHES GEBIET

Die vorliegende Erfindung bezieht sich auf das Gebiet der Gasturbinen. Sie betrifft ein Verfahren zum Betrieb einer Gasturbinenanlage gemäss dem Oberbegriff des Anspruchs 1 sowie eine Gasturbinenanlage zur Durchführung des Verfahrens.

STAND DER TECHNIK

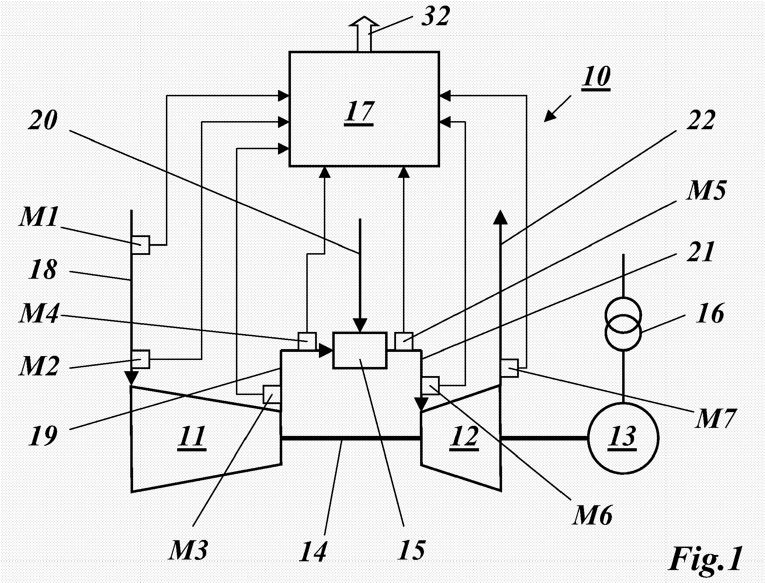

Die Erfindung geht aus von einer Gasturbinenanlage, wie sie beispielhaft in Fig. 1 wiedergegeben ist. Die Gasturbinenanlage 10 der Fig. 1 umfasst einen Verdichter 11 zur Verdichtung von aus der Umgebung über einen Verdichtereinlass 18 angesaugter Verbrennungsluft, eine Brennkammer 15, in der über eine Brennstoffzufuhr 20 zugeführter Brennstoff mittels der verdichteten Verbrennungsluft verbrannt wird, und eine nachgeschaltete Turbine 12, in der das aus der Brennkammer 15 kommende Heissgas unter Arbeitsleistung entspannt wird. Die Turbine 12 treibt über eine Welle 14 den Verdichter 11 und einen Generator 13 an, der elektrische Leistung erzeugt und über einen Transformator 16 an ein (nicht dargestelltes) Netz abgibt.

Eine solche Gasturbinenanlage 10 wird bei sehr hohen Temperaturen betrieben, um einen guten Wirkungsgrad zu erreichen. Für die am Ausgang der Brennkammer 15 und am Turbineneinlass 21 auftretenden Temperaturen gibt es bislang keine geeigneten Messinstrumente. Dennoch sind diese Temperaturen für die Regelung der Gasturbinenanlage wichtig. Es werden daher seit langem andere Parameter der Gasturbinenanlage, wie z.B. die Abgastemperatur hinter der Turbine, die Temperatur am Verdichterauslass und verschiedene Drücke bzw. Druckverhältnisse, die zuverlässig gemessen werden können, gemessen, und aus diesen Parametern wird beispielsweise die Temperatur am Ausgang der Brennkammer indirekt bestimmt (siehe z.B. die EP-A2-1 231 369).

Es hat sich dabei herausgestellt, dass die Zusammensetzung des Gases, insbesondere der Gehalt an Wasser in dem durch die Gasturbine strömenden Arbeitsmedium bei der Bestimmung der Brennkammerausgangstemperatur berücksichtigt werden muss. Wird von einer bestimmten festen Gaszusammensetzung ausgegangen, kann der für die Bestimmung der Temperatur verwendete Algorithmus entsprechend ausgelegt werden. Probleme entstehen jedoch, wenn die Zusammensetzung des Gases, insbesondere der Wassergehalt im Betrieb, für den der Algorithmus zur Temperaturbestimmung ausgelegt ist, erheblich abweicht. Während die natürlichen Schwankungen in der Luftfeuchtigkeit der angesaugten Umgebungsluft vergleichsweise gering sind und daher weniger Probleme verursachen, ergeben sich beispielsweise durch Einführung von Wasser in den Ansaugtrakt im Rahmen der als "high fogging" oder "wet compression" bezeichneten Verfahren zur Leistungssteigerung erhebliche Abweichungen im Wassergehalt.

Verbrennungsluft verbrannt wird, und eine nachgeschaltete Turbine 12, in der das aus der Brennkammer 15 kommende Heissgas unter Arbeitsleistung entspannt wird. Die Turbine 12 treibt über eine Welle 14 den Verdichter 11 und einen Generator 13 an, der elektrische Leistung erzeugt und über einen Transformator 16 an ein (nicht dargestelltes) Netz abgibt.

Eine solche Gasturbinenanlage 10 wird bei sehr hohen Temperaturen betrieben, um einen guten Wirkungsgrad zu erreichen. Für die am Ausgang der Brennkammer 15 und am Turbineneinlass 21 auftretenden Temperaturen gibt es bislang keine geeigneten Messinstrumente. Dennoch sind diese Temperaturen für die Regelung der Gasturbinenanlage wichtig. Es werden daher seit langem andere Parameter der Gasturbinenanlage, wie z.B. die Abgastemperatur hinter der Turbine, die Temperatur am Verdichterauslass und verschiedene Drücke bzw. Druckverhältnisse, die zuverlässig gemessen werden können, gemessen, und aus diesen Parametern wird beispielsweise die Temperatur am Ausgang der Brennkammer indirekt bestimmt (siehe z.B. die EP-A2-1 231 369).

US-A-20040011050 beschreibt ein Verfahren zum Betrieb und zur Steuerung einer Gasturbinenanlage. Das Verfahren verlangt die Berechnung der Verbrennungstemperatur innerhalb der Brennkammer der Gasturbinenanlage. Die Berechnung basiert auf die Bestimmung der Temperatur der einfließenden Luft und der Sauerstoffkonzentration der Verbrennungsabgase.

EP-A-1531243 beschreibt ein weiteres Verfahren zum Betrieb und zur Steuerung einer Gasturbinenanlage. Insbesondere wird ein Verfahren beschrieben, um die Abgaswerte zu bestimmen und zu kontrollieren. Hierbei werden Temperaturwerte und Druckwerte an unterschiedlichen Stellen innerhalb der Gasturbinenanlage bestimmt. Ebenfalls wird beschrieben, dass auch der Wassergehalt innerhalb der Umgebungsluft berücksichtigt werden kann.

Es hat sich dabei herausgestellt, dass die Zusammensetzung des Gases, insbesondere der Gehalt an Wasser in dem durch die Gasturbine strömenden Arbeitsmedium bei der Bestimmung der Brennkammerausgangstemperatur berücksichtigt werden muss. Wird von einer bestimmten festen Gaszusammensetzung ausgegangen, kann der für die Bestimmung der Temperatur verwendete Algorithmus entsprechend ausgelegt werden. Probleme entstehen jedoch, wenn die Zusammensetzung des Gases, insbesondere der Wassergehalt im Betrieb, für den der Algorithmus zur Temperaturbestimmung ausgelegt ist, erheblich abweicht. Während die natürlichen Schwankungen in der Luftfeuchtigkeit der angesaugten Umgebungsluft vergleichsweise gering sind und daher weniger Probleme verursachen, ergeben sich beispielsweise durch Einführung von Wasser in den Ansaugtrakt im Rahmen der als "high fogging" oder "wet compression" bezeichneten Verfahren zur Leistungssteigerung erhebliche Abweichungen im Wassergehalt.

Dabei ist festzustellen, dass die Gaszusammensetzung besonders bei Verbrennung von Schwachgasen (Syngas, Industriegasen, integrierter Kohlevergasung) stark von der Zusammensetzung des Brennstoffes und der Brennstoffmenge abhängig ist.

Es ist deshalb in der eingangs genannten Patentanmeldung bereits vorgeschlagen worden, die Zufuhr von Wasser auf der Ansaugseite des Verdichters zu messen und diese Werte bei der Bestimmung der Brennkammerausgangstemperatur zu berücksichtigen. In einer dazu parallelen Patentanmeldung (US-A1-2004/076218) ist zumindest im Titel darauf hingewiesen worden, dass bei der Bestimmung der Brennkammerausgangstemperatur auch der Wassergehalt des Brennstoffs korrigierend berücksichtigt werden kann.

Durch die Bestimmung des mit der Ansaugluft und/oder mit dem Brennstoff in das Arbeitsmedium aufgenommenen Wassers können zwar einige Effekte bei der Temperaturbestimmung berücksichtigt werden. Es gibt jedoch weitere Betriebsarten von Gasturbinenanlagen, die im Hinblick auf den Wassergehalt im Arbeitsmedium Auswirkungen auf die Temperaturbestimmung haben können. Entscheidend ist dabei der Wasserdampfgehalt im Abgas der Turbine. Weicht dieser Gehalt erheblich von dem Wert ab, der beim Algorithmus für die Temperaturbestimmung zugrunde gelegt worden ist, verschiebt sich der Betriebspunkt und der Temperaturabfall über der Turbine gemäss der bekannten Beziehung für die isentrope Expansion

$$\frac{T6}{T7} = \left(\frac{p6}{p7}\right)^{\frac{\kappa-1}{\kappa}}$$

mit der Temperatur T6 und dem Druck p6 am Turbineneinlass (Messstelle M6 in Fig. 1), der Temperatur T7 und dem Druck p7 am Turbinenauslass (Messstelle M7 in Fig.) und dem Verhältnis κ der spezifischen Wärmen. Typische Beispiele für Betriebsarten der Gasturbinenanlage mit der Einspritzung von Wasser oder Dampf sind die folgenden:

- Leistungssteigerung

    o Einspritzen von Wasser oder Dampf in die Brennkammer;
    o Einspritzen von Wasser oder Dampf in das Kühlluftsystem (siehe z.B. die Druckschrift EP-A2-0 995 891);

- Abgaskontrolle (NOx etc.)

    o Einspritzen von Wasser oder Dampf in die Brennkammer;

- Für Gasturbinenanlagen mit Quencher

    o Einspritzen von Wasser in die Niederdruck- und Hochdruck-Kühlluftkühler und damit in das Kühlluftsystem;

- Ansaugluftkühlung

    o Verdampfungskühler;
    o Fogging;
    o High Fogging.

- Wassergehalt als Verbrennungsprodukt

DARSTELLUNG DER ERFINDUNG

Es ist Aufgabe der Erfindung, ein Verfahren zum Betrieb einer Gasturbinenanlage anzugeben, welches die Nachteile der bekannten Verfahren vermeidet und sich insbesondere dadurch auszeichnet, dass die Zusammensetzung des Gases, insbesondere der Einfluss des Wassergehalts auf die Temperaturbestimmung bei der Regelung der Gasturbinenanlage generell berücksichtigt wird, sowie eine Gasturbinenanlage zur Durchführung des Verfahrens anzugeben.

Die Aufgabe wird durch die Gesamtheit der Merkmale der Ansprüche 1 und 10 gelöst. Das erfindungsgemäss Verfahren ist dadurch gekennzeichnet, dass die Zusammensetzung des Gases, insbesondere der Wassergehalt im Abgas der Turbine bestimmt wird, und dass der bestimmte Wassergehalt im Abgas der Turbine bei der Ableitung der Brennkammerausgangstemperatur berücksichtigt wird. Die erfindungsgemässe Gasturbinenanlage zeichnet sich dadurch aus, dass zweite Mittel zur Bestimmung der Zusammensetzung des Gases, insbesondere des Wassergehalts im Abgas der Turbine vorgesehen sind, welche mit der Regelung verbunden sind.

Eine bevorzugte Ausgestaltung des erfindungsgemässen Verfahrens ist dadurch gekennzeichnet, dass die Temperaturen am Verdichtereinlass und am Turbinenauslass gemessen werden, dass der Druck am Turbinenauslass und wenigstens einer der Drücke am Verdichterauslass, am Eingang der Brennkammer, am Ausgang der Brennkammer oder am Turbineneinlass gemessen wird, und dass die gemessenen Temperaturen am Verdichtereinlass und am Turbinenauslass und das Verhältnis eines der gemessenen Drücke am Verdichterauslass, am Eingang der Brennkammer, am Ausgang der Brennkammer oder am Turbineneinlass zum gemessenen Druck am Turbinenauslass zur Ableitung der Brennkammerausgangstemperatur herangezogen werden.

Insbesondere kann zur Bestimmung des Wassergehaltes die Zusammensetzung des Abgases der Turbine gemessen werden. Wenn Mittel zur Überwachung des NOx-Gehaltes im Abgas der Turbine vorhanden sind, können mit Vorteil die Überwachungsmittel zur Messung der Zusammensetzung des Abgases der Turbine verwendet werden.

Es kann aber auch der Wassergehalt im Abgas der Turbine aus der Zusammensetzung des Brennstoffes und der Grösse des Brennstoff-Massenflusses näherungsweise bestimmt werden, wobei entweder der Brennstoff-Massenfluss direkt gemessen wird, oder der Brennstoff-Massenfluss durch ein Regelventil geregelt wird, die Stellung des Regelventils überwacht wird, und der Brennstoff-Massenfluss aus der Stellung des Regelventils berechnet wird, oder die Ausgangsleistung der Gasturbinenanlage oder ein vergleichbarer Parameter gemessen wird, und der Brennstoff-Massenfluss aus der gemessenen Ausgangsleistung bzw. dem vergleichbaren Parameter berechnet wird.

Es ist aber auch denkbar, dass der Wassergehalt aller in das Arbeitsmedium der Gasturbine einfliessenden Massenströme bestimmt wird, und dass daraus der im Abgas der Turbine vorhandene Wassergehalt abgeleitet wird.

Eine Ausgestaltung der Gasturbinenanlage nach der Erfindung zeichnet sich dadurch aus, dass die ersten Mittel Messstellen zur Messung der Temperatur am Verdichtereinlass sowie der Temperatur und des Druckes am Turbinenauslass umfassen, sowie wenigstens eine Messstelle zur Messung eines der Drücke am Verdichterauslass, am Eingang der Brennkammer, am Ausgang der Brennkammer oder am Turbineneinlass.

Die zweiten Mittel umfassen vorzugsweise eine Analyseeinrichtung zur Analyse des Abgases der Turbine, oder Mittel zur Bestimmung des Brennstoffmassenstroms.

Insbesondere können die Mittel zur Bestimmung des Brennstoffmassenstroms eine in der Brennstoffzufuhr angeordnete Durchflussmesseinrichtung umfassen. Es ist aber auch denkbar, dass in der Brennstoffzufuhr ein Regelventil angeordnet ist, und dass die Mittel zur Bestimmung des Brennstoffmassenstroms eine Vorrichtung zur Feststellung der Position des Regelventils umfassen.

Ebenso ist es denkbar, dass die Turbine einen Generator zur Erzeugung elektrischer Leistung antreibt, und dass die Mittel zur Bestimmung des Brennstoffmassenstroms eine Leistungsmesseinrichtung an den Klemmen des Generators umfassen.

Die zweiten Mittel können aber auch Wassermesseinrichtungen an den Stellen der Gasturbinenanlage umfassen, an denen eine Wasserzufuhr in das Arbeitsmedium der Gasturbinenanlage stattfindet.

Analoges gilt für beide Turbinen im Fall der sequentiellen Verbrennung. Eine solche Anlage geht aus EP-B1-0 620 362 hervor, wobei diese ganze Druckschrift einen integrierenden Bestandteil dieser Anmeldung bildet.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1 das stark vereinfachte Schema einer beispielhaften Gasturbinenanlage mit Regelung und verschiedenen Messstellen zur Aufnahme der für die Regelung geeigneten Gasturbinenparameter;

Fig. 2 in einer zu Fig. 1 vergleichbaren Darstellung eine Gasturbinenanlage, bei der für die Regelung im Rahmen der Erfindung der Wassergehalt im Abgas aus einer Analyse der Abgaszusammensetzung oder aus der Brennstoffzusammensetzung und dem Brennstoffmassenstrom bestimmt werden kann; und

Fig. 3 in einer zu Fig. 1 vergleichbaren Darstellung eine Gasturbinenanlage, bei der für die Regelung im Rahmen der Erfindung der Wassergehalt im Abgas durch Messungen aller Wasser in das Arbeitsmedium eintragenden Massenströme bestimmt werden kann.

WEGE ZUR AUSFÜHRUNG DER ERFINDUNG

Fig. 1 zeigt das stark vereinfachte Schema einer beispielhaften Gasturbinenanlage mit Regelung und verschiedenen Messstellen zur Aufnahme der für die Regelung geeigneten Gasturbinenparameter. Die Gasturbinenanlage 10, die - wie bereits weiter oben beschrieben - einen Verdichter 11, eine Brennkammer 15, eine Turbine 12 und einen Generator 13 sowie eine Regelung 17 umfasst, hat eine Mehrzahl von Messstellen M1,..,M7, an denen Temperaturen und/oder Drücke für die Regelung der Gasturbine gemessen werden können. An der Messstelle M1 am Eingang des Verdichtereinlasses 18, über den die Umgebungsluft angesaugt wird, kann die Temperatur T1 der Umgebungsluft gemessen werden, an der Messstelle M2 die Temperatur T2 direkt am Eingang des Verdichters 11. An der Messstelle M3 können Temperatur T3 und Druck p3 am Verdichterauslass 19 gemessen werden, an der Messstelle M4 der Druck p4 am Eingang der Brennkammer 15, an der Messstelle M5 der Druck p5 am Ausgang der Brennkammer, an der Messstelle M6 der Druck p6 am Turbineneinlass 21, und an der Messstelle M7 die Temperatur T7 und der Druck p7 am Turbinenauslass 22.

Die an den Messstellen M1,..,M7 aufgenommenen Parameter werden in die Regelung eingegeben und bei der Bestimmung der (nicht messbaren) Temperatur am Ausgang der Brennkammer 15 bzw. am Eingang der Turbine verwendet. Insbesondere verwendet werden die Temperaturen T2 und T7, sowie ein Druckverhältnis $p_x/p_7$, wobei x= 3,4,5,6 sein kann. Die Regelung gibt am Reglerausgang 32 Regelungssignale für Regelventile bzw. -klappen innerhalb der Gasturbinenanlage 10 ab, mit denen die Temperatur am Ausgang der Brennkammer 15 auf dem gewünschten Wert eingeregelt bzw. gehalten werden kann.

Gemäss der Erfindung wird bei der Bestimmung der Temperatur am Ausgang der Brennkammer 15 generell die Zusammensetzung des Gases, insbesondere der Wassergehalt im Abgas der Turbine 12 berücksichtigt, der die Summe aller Wassermassenströme umfasst, die in das Arbeitsmedium eingehen und die indirekte Temperaturbestimmung beeinflussen.

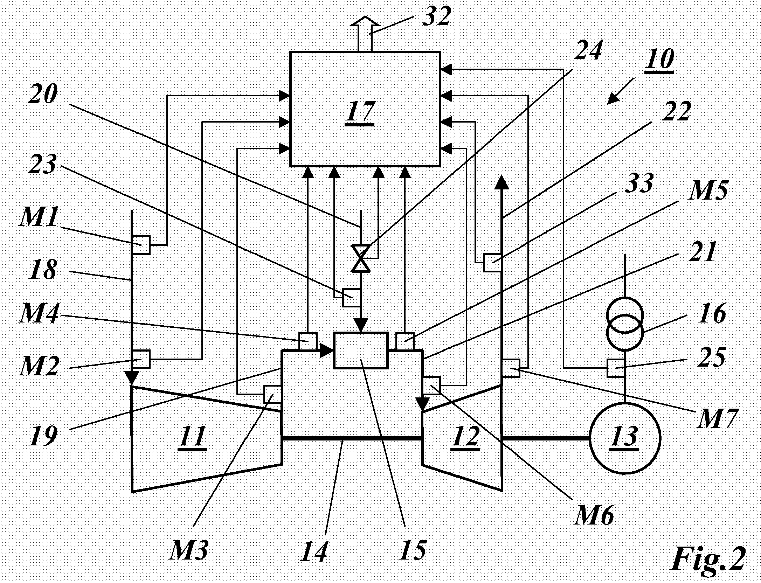

Gemäss Fig. 2 kann dazu eine hinter der Turbine 12 im Abgasstrom angeordnete Analyseeinrichtung 33 herangezogen werden, mit der bereits die Zusammensetzung des Abgases im Bezug auf NOx ermittelt wird. Aus der Analyse ergibt sich der Wassergehalt im Abgas, dessen Wert in die Regelung 17 eingegeben und dort zur Korrektur bei der Temperaturbestimmung verwendet werden kann.

Alternativ dazu kann der Wassergehalt im Abgas der Turbine 12 näherungsweise aus der (bekannten) Zusammensetzung des Brennstoffes und der Grösse des Brennstoff-Massenflusses näherungsweise bestimmt werden. Der Brennstoff-Massenfluss kann gemäss Fig. 2 direkt mittels einer in der Brennstoffzufuhr 20 angeordneten Durchflussmesseinrichtung 23 gemessen werden. Es ist aber auch denkbar, dass, wenn der Brennstoff-Massenfluss durch ein Regelventil 24 in der Brennstoffzufuhr 20 geregelt wird, die Stellung des Regelventils 24 überwacht und der Brennstoff-Massenfluss aus der Stellung des Regelventils 24 berechnet wird. Ebenso ist es denkbar, beispielsweise durch eine an den Klemmen des Generators 13 angeschlossene Leistungsmesseinrichtung 25 die Ausgangsleistung der Gasturbinenanlage 10 oder einen vergleichbaren Parameter zu messen, und dann den Brennstoff-Massenfluss aus der gemessenen Ausgangsleistung bzw. dem vergleichbaren Parameter zu berechnen.

Eine andere Möglichkeit zur Bestimmung des Wassergehaltes im Abgas besteht darin, dass der Wassergehalt aller in das Arbeitsmedium der Gasturbinenanlage 10 einfliessenden Massenströme bestimmt wird, und dass daraus der im Abgas der Turbine 12 vorhandene Wassergehalt abgeleitet wird. Wasser kann dabei zugeführt werden:

- durch die Luft auf der Ansaugseite des Verdichters 11;
- durch einen Verdampfungskühler oder dgl.;
- durch ein "fogging"- oder "high fogging"-System;
- durch Einspritzen in die Brennkammer oder das Kühlsystem zur Leistungserhöhung oder Abgaskontrolle;
- durch den Brennstoff selbst:

Wasser kann aber auch entzogen werden, und zwar durch ein Kühlsystem und/oder durch eine Wasserabfuhr, z.B. Tropfenabscheider im Kühlluftsystem bei "High Fogging"-Betrieb.

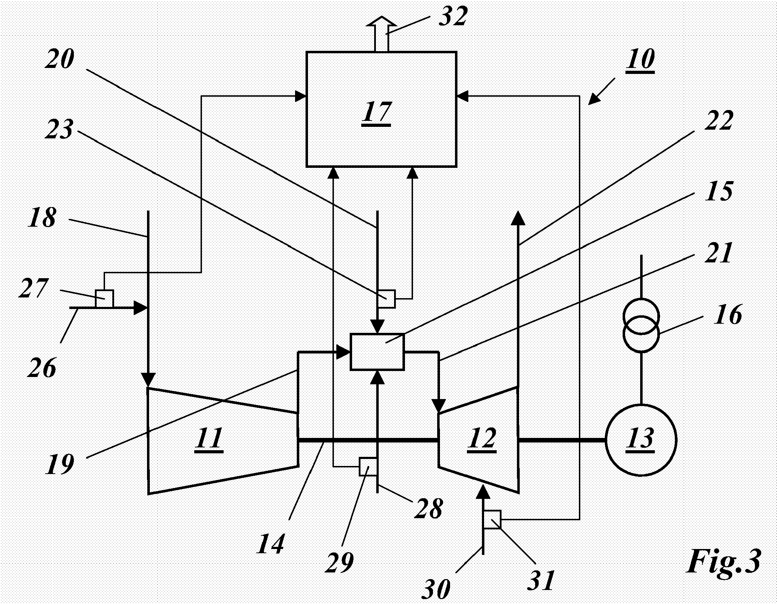

In Fig. 3 sind beispielhaft drei wasserzuführende Massenströme eingezeichnet, nämlich die Wasserzufuhr 26 im Ansaugbereich des Verdichters 11, die Wasserzufuhr 28 in die Brennkammer, und die Wasserzufuhr 30 zur Kühlung der Turbine 12. In jedem Fall sind Wassermesseinrichtungen 26, 29 und 31 vorgesehen, deren Messwerte in die Regelung 17 eingegeben werden.

Insgesamt ergibt sich mit der Erfindung ein verallgemeinertes Betriebsverfahren, bei dem die Abgaszusammensetzung, insbesondere im Hinblick auf den Wassergehalt, bestimmt wird, und damit alle unter den verschiedenen Betriebsbedingungen vorkommenden, für die Temperaturbestimmung wichtigen Wasserzusätze erfasst werden. Hierdurch wird eine genauere Bestimmung der Temperatur am Ausgang der Brennkammer und damit eine verbesserte Regelung der Gasturbinenanlage ermöglicht.

BEZUGSZEICHENLISTE

| 10 | Gasturbinenanlage |
|---|---|
| 11 | Verdichter |
| 12 | Turbine |
| 13 | Generator |
| 14 | Welle |
| 15 | Brennkammer |
| 16 | Transformator |
| 17 | Regelung |
| 18 | Verdichtereinlass |
| 19 | Verdichterauslass |
| 20 | Brennstoffzufuhr |
| 21 | Turbineneinlass |
| 22 | Turbinenauslass |
| 23 | Durchflussmesseinrichtung |
| 24 | Regelventil |
| 25 | Leistungsmesseinrichtung |
| 26,28,30 | Wasserzufuhr |
| 27,29,31 | Wassermesseinrichtung |
| 32 | Reglerausgang |
| 33 | Analyseeinrichtung |
| M1,..,M7 | Messstelle |

Patentansprüche

1. Verfahren zum Betrieb einer Gasturbinenanlage (10) mit einem Verdichter (11) zur Verdichtung von aus der Umgebung angesaugter Verbrennungsluft, einer Brennkammer (15) zur Erzeugung von Heissgas durch Verbrennung eines Brennstoffes mit der verdichteten Verbrennungsluft, und einer Turbine (12), in welcher das Heissgas aus der Brennkammer (15) unter Leistung von Arbeit entspannt wird, bei welchem Verfahren an verschiedenen Stellen der Gasturbinenanlage (10) Temperaturen (T2, T7) und Drücke (p3, p4, p5, p6, p7) gemessen werden, und aus den gemessenen Temperaturen (T2, T7) und Drücken (p3, p4, p5, p6, p7) eine Brennkammerausgangstemperatur abgeleitet und zur Regelung der Gasturbinenanlage (10) verwendet wird, **dadurch gekennzeichnet, dass** die Zusammensetzung des Gases bestimmt wird, wobei während der Bestimmung der Zusammensetzung des Gases mindestens der Wassergehalt im Abgas der Turbine (12) bestimmt wird, und wobei mindestens der bestimmte Wassergehalt im Abgas der Turbine (12) bei der Ableitung der Brennkammerausgangstemperatur berücksichtigt wird.

2. Verfahren nach Anspruch 1, **dadurch gekennzeichnet, dass** die Temperaturen (T2, T7) am Verdichtereinlass (18) und am Turbinenauslass (22) gemessen werden, dass der Druck (p7) am Turbinenauslass (22) und wenigstens einer der Drücke (p3, p4, p5, p6) am Verdichterauslass (19), am Eingang der Brennkammer (15), am Ausgang der Brennkammer (15) oder am Turbineneinlass (21) gemessen wird, und dass die gemessenen Temperaturen (T2, T7) am Verdichtereinlass (18) und am Turbinenauslass (22) und das Verhältnis eines der gemessenen Drücke (p3, p4, p5, p6) am Verdichterauslass (19), am Eingang der Brennkammer (15), am Ausgang der Brennkammer (15) oder am Turbineneinlass zum gemessenen Druck (p7) am Turbinenauslass (22) zur Ableitung der Brennkammerausgangstemperatur herangezogen werden.

3. Verfahren nach Anspruch 1 oder 2, **dadurch gekennzeichnet, dass** zur Bestimmung des Wassergehaltes die Zusammensetzung des Abgases der Turbine (12) gemessen wird.

4. Verfahren nach Anspruch 3, **dadurch gekennzeichnet, dass** Mittel (33) zur Überwachung des NOx-Gehaltes im Abgas der Turbine (12) vorhanden sind, und dass die Überwachungsmittel (33) zur Messung der Zusammensetzung des Abgases der Turbine (12) verwendet werden.

5. Verfahren nach Anspruch 1 oder 2, **dadurch gekennzeichnet, dass** der Wassergehalt im Abgas der Turbine (12) aus der Zusammensetzung des Brennstoffes und der Grösse des Brennstoff-Massenflusses näherungsweise bestimmt wird.

6. Verfahren nach Anspruch 5, **dadurch gekennzeichnet, dass** der Brennstoff-Massenfluss direkt gemessen wird.

7. Verfahren nach Anspruch 5, **dadurch gekennzeichnet, dass** der Brennstoff-Massenfluss durch ein Regelventil (24) geregelt wird, dass die Stellung des Regelventils (24) überwacht wird, und dass der Brennstoff-Massenfluss aus der Stellung des Regelventils (24) berechnet wird.

8. Verfahren nach Anspruch 5, **dadurch gekennzeichnet, dass** die Ausgangsleistung der Gasturbinenanlage (10) oder ein vergleichbarer Parameter gemessen wird, und dass der Brennstoff-Massenfluss aus der gemessenen Ausgangsleistung bzw. dem vergleichbaren Parameter berechnet wird.

9. Verfahren nach Anspruch 1 oder 2, **dadurch gekennzeichnet, dass** der Wassergehalt aller in das Arbeitsmedium der Gasturbinenanlage (10) einfliessenden Massenströme bestimmt wird, und dass daraus der im Abgas der Turbine (12) vorhandene Wassergehalt abgeleitet wird.

10. Gasturbinenanlage (10) zur Durchführung des Verfahrens nach Anspruch 1, welche Gasturbinenanlage (10) einen Verdichter (11) zur Verdichtung von aus der Umgebung angesaugter Verbrennungsluft, eine Brennkammer (15) zur Erzeugung von Heissgas durch Verbrennung eines Brennstoffes mit der verdichteten Verbrennungsluft, eine Turbine (12), in welcher das Heissgas aus der Brennkammer (15) unter Leistung von Arbeit entspannt wird, erste Mittel zur Messung von Temperaturen (T2, T7) und Drücke (p3, p4, p5, p6, p7) an verschiedenen Stellen der Gasturbinenanlage (10), sowie eine mit den ersten Mitteln verbundene Regelung (17) umfasst, in welcher aus den gemessenen Temperaturen (T2, T7) und Drücken (p3, p4, p5, p6, p7) eine Brennkammerausgangstemperatur abgeleitet und zur Regelung der Gasturbinenanlage (10) verwendet wird, **dadurch gekennzeichnet, dass** zweite Mittel (33) zur Bestimmung des Wassergehalts im Abgas der Turbine (12) vorgesehen sind, welche mit der Regelung (17) verbunden sind.

11. Gasturbinenanlage nach Anspruch 10, **dadurch gekennzeichnet, dass** die ersten Mittel Messstellen (M2, M7) zur Messung der Temperatur (T2) am Verdichtereinlass (18) sowie der Temperatur (T7) und des Druckes (p7) am Turbinenauslass (22) umfassen, sowie wenigstens eine Messstelle (M3, M4, M5m, M6) zur Messung eines der Drücke (p3, p4, p5, p6) am Verdichterauslass (19), am Eingang der Brennkammer (15), am Ausgang der Brennkammer (15) oder am Turbineneinlass (21).

12. Gasturbinenanlage nach Anspruch 10 oder 11, **dadurch gekennzeichnet, dass** die zweiten Mittel eine Analyseeinrichtung (33) zur Analyse des Abgases der Turbine (12) umfassen.

13. Gasturbinenanlage nach Anspruch 10 oder 11, **dadurch gekennzeichnet, dass** die zweiten Mittel (23, 24, 25) zur Bestimmung des Brennstoffmassenstroms umfassen.

**14.** Gasturbinenanlage nach Anspruch 13, **dadurch gekennzeichnet, dass** die Mittel (23, 24, 25) zur Bestimmung des Brennstoffmassenstroms eine in der Brennstoffzufuhr (20) angeordnete Durchflussmesseinrichtung (23) umfassen.

**15.** Gasturbinenanlage nach Anspruch 13, **dadurch gekennzeichnet, dass** in der Brennstoffzufuhr (20) ein Regelventil (24) angeordnet ist, und dass die Mittel (23, 24, 25) zur Bestimmung des Brennstoffmassenstroms eine Vorrichtung zur Feststellung der Position des Regelventils (24) umfassen.

**16.** Gasturbinenanlage nach Anspruch 13, **dadurch gekennzeichnet, dass** die Turbine (12) einen Generator (13) zur Erzeugung elektrischer Leistung antreibt, und dass die Mittel (23, 24, 25) zur Bestimmung des Brennstoffmassenstroms eine Leistungsmesseinrichtung (25) an den Klemmen des Generators (13) umfassen.

**17.** Gasturbinenanlage nach Anspruch 10 oder 11, **dadurch gekennzeichnet, dass** die zweiten Mittel Wassermesseinrichtungen (27, 29, 31) an den Stellen der Gasturbinenanlage (10) umfassen, an denen eine Wasserzufuhr (26, 28, 30) in das Arbeitsmedium der Gasturbine und/oder durch eine Wasserabfuhr, z.B. Tropfenabscheider im Kühlluftsystem bei "High Fogging"-Betrieb, stattfindet.

**18.** Gasturbinenanlage nach einem der Ansprüche 13 bis 16, in der nicht nur der Brennstoffmassenstrom bestimmt wird, sondern auch die Brennstoffzusammensetzung und deren Einfluss auf die Abgaszusammensetzung berücksichtigt wird.

**Claims**

**1.** Method for operating a gas turbine plant (10) with a compressor (11) for compressing combustion air drawn in from the environment, a combustion chamber (15) for producing hot gas by burning a fuel with the compressed combustion air, and a turbine (12) in which the hot gas from the combustion chamber (15) is expanded to perform work, in which method temperatures (T2, T7) and pressures (p3, p4, p5, p6, p7) are measured at various points of the gas turbine plant (10), and from the measured temperatures (T2, T7) and pressures (p3, p4, p5, p6, p7), a combustion chamber outlet temperature is derived and used to regulate the gas turbine plant (10), **characterised in that** the composition of the gas is determined, wherein during determination of the gas composition at least the water content in the exhaust gas of the turbine (12) is determined, and wherein at least the determined water content in the exhaust gas of the turbine (12) is taken into account in the derivation of the combustion chamber outlet temperature.

**2.** Method according to claim 1, **characterised in that** the temperatures (T2, T7) are measured at the compressor inlet (18) and the turbine outlet (22), that the pressure (p7) at the turbine outlet (22) is measured and at least one of the pressures (p3, p4, p5, p6) at the compressor outlet (19), at the inlet to the combustion chamber (15), at the outlet from the combustion chamber (15) or at the turbine inlet (21) is measured, and that the temperatures (T2, T7) measured at the compressor inlet (18) and at the turbine outlet (22) and the ratio of one of the pressures (p3, p4, p5, p6) measured at the compressor outlet (19), at the inlet to the combustion chamber (15), at the outlet from the combustion chamber (15) or at the turbine inlet (21), to the pressure (p7) measured at the turbine outlet (22), are used to derive the combustion chamber outlet temperature.

**3.** Method according to claim 1 or 2, **characterised in that** to determine the water content, the composition of the exhaust gas from the turbine (12) is measured.

**4.** Method according to claim 3, **characterised in that** means (33) are provided for monitoring the NOx content in the exhaust gas from the turbine (12), and that the monitoring means (33) are used to measure the composition of the exhaust gas from the turbine (12).

**5.** Method according to claim 1 or 2, **characterised in that** the water content in the exhaust gas from the turbine (12) is determined approximately from the composition of the fuel and the size of the fuel mass flow.

**6.** Method according to claim 5, **characterised in that** the fuel mass flow is measured directly.

**7.** Method according to claim 5, **characterised in that** the fuel mass flow is regulated by a control valve (24), that the position of the control valve (24) is monitored, and that the fuel mass flow is calculated from the position of the control valve (24).

**8.** Method according to claim 5, **characterised in that** the output power of the gas turbine plant (10) or a comparable parameter is measured, and that the fuel mass flow is calculated from the measured output power or the comparable parameter.

**9.** Method according to claim 1 or 2, **characterised in that** the water content of all mass flows flowing into the working medium of the gas turbine plant (10) is determined, and that from this the water content present in the exhaust gas of the turbine (12) is derived.

**10.** Gas turbine plant (10) for performing the method according to claim 1, which gas turbine plant (10) has a compressor (11) for compressing combustion air drawn in from the environment, a combustion chamber (15) for producing hot gas by burning a fuel with the compressed combustion air, a turbine (12) in which the hot gas from the combustion chamber (15) is expanded to perform work, first means for measuring temperatures (T2, T7) and pressures (p3, p4, p5, p6, p7) at various points on the gas turbine plant (10), and a controller (17) which is connected to the first means and in which, from the measured temperatures (T2, T7) and pressures (p3, p4, p5, p6, p7), a combustion chamber outlet temperature is derived and used to control the gas turbine plant (10), **characterised in that** second means (33) are provided for determining the water content in the exhaust gas of the turbine (12) which are connected to the control system (17).

**11.** Gas turbine plant according to claim 10, **characterised in that** the first means comprise measuring points (M2, M7) for measuring the temperature (T2) at the compressor inlet (18) and the temperature (T7) and pressure (p7) at the turbine outlet (22), and at least one measuring point (M3, M4, M5, M6) for measuring one of the pressures (p3, p4, p5, p6) at the compressor outlet (19), at the inlet to the combustion chamber (15), at the outlet from the combustion chamber (15) or at the turbine inlet (21).

**12.** Gas turbine plant according to claim 10 or 11, **characterised in that** the second means comprise an analysis device (33) for analysing the exhaust gas from the turbine (12).

**13.** Gas turbine plant according to claim 10 or 11, **characterised in that** the second means comprise means (23, 24, 25) for determining the fuel mass flow.

**14.** Gas turbine plant according to claim 13, **characterised in that** the means (23, 24, 25) for determining the fuel mass flow comprise a flow measuring device (23) arranged in the fuel supply (20).

**15.** Gas turbine plant according to claim 13, **characterised in that** a control valve (24) is arranged in the fuel supply (20), and that the means (23, 24, 25) for determining the fuel mass flow comprise a device for establishing the position of the control valve (24).

**16.** Gas turbine plant according to claim 13, **characterised in that** the turbine (12) drives a generator (13) for generating electrical power, and that the means (23, 24, 25) for determining the fuel mass flow comprise a power measuring device (25) at the terminals of the generator (13).

**17.** Gas turbine plant according to claim 10 or 11, **characterised in that** the second means comprise water measuring devices (27, 29, 31) at the points of the gas turbine plant (10) at which a water supply (26, 28, 30) takes place into the working medium of the gas turbine and/or a water extraction takes place, e.g. droplet precipitator in the cooling air system in "high fogging" operation.

**18.** Gas turbine plant according to any of claims 13 to 16, in which not only is the fuel mass flow determined, but also the fuel composition and its influence on the exhaust gas composition are taken into account.

**Revendications**

**1.** Procédé de commande d'une installation à turbine à gaz (10) avec un compresseur (11) pour la compression de l'air de combustion aspiré dans l'environnement, une chambre de combustion (15) pour la production de gaz chaud par la combustion d'un combustible avec l'air de combustion comprimé et une turbine (12), dans laquelle le gaz chaud est détendu hors de la chambre de combustion (15) par la production d'un travail, des températures (T2, T7) et des pressions (p3, p4, p5, p6, p7) étant mesurées, dans ce procédé, à différents endroits de l'installation à turbine à gaz (10) et une température de sortie de chambre de combustion étant déduite des températures (T2, T7) et pressions (p3, p4, p5, p6, p7) mesurées et utilisée pour la régulation de l'installation à turbine à gaz (10), **caractérisé en ce que** la composition du gaz est déterminée, au moins la teneur en eau étant déterminée dans le gaz d'échappement de la turbine (12) pendant la détermination de la composition du gaz et au moins la teneur en eau déterminée dans le gaz d'échappement de la turbine (12) étant prise en compte pour la détermination de la température de sortie de la chambre de combustion.

**2.** Procédé selon la revendication 1, **caractérisé en ce que** les températures (T2, T7) sont mesurées à l'entrée du compresseur (18) et à la sortie de la turbine (22), **en ce que** la pression (p7) est mesurée à la sortie de la turbine (22) et au moins une des pressions (p3, p4, p5, p6) est mesurée à la sortie du compresseur (19), à l'entrée de la chambre de combustion (15), à la sortie de la chambre de combustion (15) ou à l'entrée de la turbine (21) et **en ce que** les températures (T2, T7) mesurées à l'entrée du compresseur (18) et à la sortie de la turbine (22) et le rapport entre une des pressions (p3, p4, p5, p6) mesurées à la sortie du compresseur (19), à l'entrée de la chambre de combustion (15), à la sortie de la chambre de combustion (15) ou à l'entrée de la turbine et la pression (p7) mesurée à la sortie de la turbine (22) sont utilisés pour la détermination de la température de sortie de la chambre de combustion.

3. Procédé selon la revendication 1 ou 2, **caractérisé en ce que**, pour la détermination de la teneur en eau, la composition du gaz d'échappement de la turbine (12) est mesurée.

4. Procédé selon la revendication 3, **caractérisé en ce que** des moyens (33) sont prévus pour la surveillance de la teneur en NOx du gaz d'échappement de la turbine (12) et **en ce que** les moyens de surveillance (33) sont utilisés pour la mesure de la composition du gaz d'échappement de la turbine (12).

5. Procédé selon la revendication 1 ou 2, **caractérisé en ce que** la teneur en eau du gaz d'échappement de la turbine (12) est déterminée approximativement à partir de la composition du combustible et du débit massique de combustible.

6. Procédé selon la revendication 5, **caractérisé en ce que** le débit massique de combustible est mesuré directement.

7. Procédé selon la revendication 5, **caractérisé en ce que** le débit massique de combustible est régulé par l'intermédiaire d'une soupape de régulation (24), **en ce que** le réglage de la soupape de régulation (24) est surveillé et **en ce que** le débit massique de combustible est calculé à partir de la position de la soupape de régulation (24).

8. Procédé selon la revendication 5, **caractérisé en ce que** la puissance de sortie de l'installation à turbine à gaz (10) ou un paramètre comparable est mesuré et **en ce que** le débit massique de combustible est calculé à partir de la puissance de sortie ou du paramètre comparable.

9. Procédé selon la revendication 1 ou 2, **caractérisé en ce que** la teneur en eau de tous les flux massiques entrant dans le fluide de travail de l'installation à turbine à gaz (10) est déterminée et **en ce que** la teneur en eau du gaz d'échappement de la turbine (12) est déduite à partir de celle-ci.

10. Installation à turbine à gaz (10) pour l'exécution du procédé selon la revendication 1, cette installation à turbine à gaz (10) comprenant un compresseur (11) pour la compression d'un air de combustion aspiré dans l'environnement, une chambre de combustion (15) pour la production de gaz chaud par la combustion d'un combustible avec l'air de combustion comprimé, une turbine (12), dans laquelle le gaz chaud est détendu hors de la chambre de combustion (15) en produisant un travail, des premiers moyens de mesure de températures (T2, T7) et de pressions (p3, p4, p5, p6, p7) à différents endroits de l'installation à turbine à gaz (10), ainsi qu'un dispositif de régulation (17) relié aux premiers moyens, dans lequel une température de sortie de chambre de combustion est déterminée à partir des températures (T2, T7) et des pressions (p3, p4, p5, p6, p7) mesurées et utilisée pour la régulation de l'installation à turbine à gaz (10), **caractérisée en ce que** des deuxièmes moyens (33) sont prévus pour la détermination de la teneur en eau du gaz d'échappement de la turbine (12), qui sont reliés avec le dispositif de régulation (17).

11. Installation à turbine à gaz selon la revendication 10, **caractérisée en ce que** les premiers moyens comprennent des points de mesure (M2, M7) pour la mesure de la température (T2) à l'entrée du compresseur (18) ainsi que de la température (T7) et de la pression (p7) à la sortie de la turbine (22), ainsi qu'au moins un point de mesure (M3, M4, M5m, M6) pour la mesure d'une des pressions (p3, p4, p5, p6) à la sortie du compresseur (19), à l'entrée de la chambre de combustion (15), à la sortie de la chambre de combustion (15) ou à l'entrée de la turbine (21).

12. Installation à turbine à gaz selon la revendication 10 ou 11, **caractérisée en ce que** les deuxièmes moyens comprennent un dispositif d'analyse (33) pour l'analyse du gaz d'échappement de la turbine (12).

13. Installation à turbine à gaz selon la revendication 10 ou 11, **caractérisée en ce qu'**elle comprend des deuxièmes moyens (23, 24, 25) pour la détermination du débit massique de combustible.

14. Installation à turbine à gaz selon la revendication 13, **caractérisée en ce que** les moyens (23, 24, 25) pour la détermination du débit massique de combustible comprennent un dispositif de mesure de débit (23) disposé dans l'alimentation en combustible (20).

15. Installation à turbine à gaz selon la revendication 13, **caractérisée en ce que**, dans l'alimentation en combustible (20), se trouve une soupape de régulation (24) et **en ce que** les moyens (23, 24, 25) pour la détermination du débit massique de combustible comprennent un dispositif de fixation de la position de la soupape de régulation (24).

16. Installation à turbine à gaz selon la revendication 13, **caractérisée en ce que** la turbine (12) entraîne un générateur (13) pour la production d'une puissance électrique et **en ce que** les moyens (23, 24, 25) pour la détermination du débit massique de combustible comprennent un dispositif de mesure de puissance (25) au niveau des bornes du générateur (13).

**17.** Installation à turbine à gaz selon la revendication 10 ou 11, **caractérisée en ce que** les deuxièmes moyens comprennent des dispositifs de mesure d'eau (27, 29, 31) au niveau des endroits de l'installation à turbine à gaz (10) auxquels a lieu une alimentation en eau (26, 28, 30) dans le fluide de travail de la turbine à gaz et/ou à travers une évacuation d'eau, par exemple un séparateur de gouttes dans le système d'air de refroidissement en mode « High-Fogging ».

**18.** Installation à turbine à gaz selon l'une des revendications 13 à 16, dans laquelle non seulement le débit massique de combustible est déterminé, mais également la composition du combustible et son influence sur la composition du gaz d'échappement est prise en compte.

**Fig.1**

EP 1 840 354 B1

Fig.2

EP 1 840 354 B1

Fig.3

**EP 1 840 354 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1231369 A2
- US 20040011050 A
- EP 1531243 A
- US 20040076218 A1
- EP 0995891 A2
- EP 0620362 B1